# EUROPEAN PATENT SPECIFICATION

(11) **EP 3 178 736 B1**
(45) Date of publication and mention of the grant of the patent: **03.10.2018**
(21) Application number: 16202291.7
(22) Date of filing: 05.12.2016
(51) Int. Cl.: B63J 4/00, C02F 1/00

(54) **BALLAST WATER TREATMENT SYSTEM WITH A BALLAST WATER TREATMENT UNIT IN THE ENGINE ROOM OF A SHIP HAVING A SUBMERGIBLE PUMP**
BALLASTWASSERAUFBEREITUNGSSYSTEM MIT EINER BALLASTWASSERAUFBEREITUNGSEINHEIT IM MOTORRAUM EINES SCHIFFES MIT EINER TAUCHPUMPE
SYSTÈME DE TRAITEMENT D'EAU DE BALLAST AU MOYEN D'UNE UNITÉ DE TRAITEMENT D'EAU DE BALLAST DANS LA SALLE DES MACHINES D'UN BATEAU AYANT UNE POMPE SUBMERSIBLE

(30) Priority: 10.12.2015 KR 20150176238; 08.04.2016 KR 20160043145
(43) Date of publication of application: 14.06.2017
(73) Proprietor: Techcross Inc., Seoul (KR)
(72) Inventor: PARK, Kyuwon, 46758 Busan (KR); KIM, Seongtae, 46758 Busan (KR); LEE, Haidon, 46758 Busan (KR); LEE, Jongwook, 46758 Busan (KR); IM, Byung-Ok, 46758 Busan (KR); CHOI, Sang-soo, 46758 Busan (KR); CHOI, Michael, 46758 Busan (KR)
(74) Representative: Cabinet Plasseraud

(56) References cited:
- EP-A2- 1 370 493
- EP-A2- 2 703 359
- JP-A- 2006 272 147
- JP-A- 2014 139 045

## Description

### BACKGROUND OF THE INVENTION

### Field of the Invention

The present invention relates to a ballast water treatment system with a ballast water treatment unit in the engine room of a ship having a submergible pump. More particularly, the present invention relates to a ballast water treatment system for a tanker ship having a submergible pump, where the ballast water treatment unit is not installed on the deck which is a normally installed location, but in an engine room, in order to minimize the installation cost.

### Description of the Related Art

In general, most cargo ships in maritime transport, excluding ships which perform a return voyage so as to exchange similar goods, perform one-way operation.

During the return voyage after one-way operation with full load condition, ballast water should be introduced into a ship so as to implement a balance of the ship, a safety, and an improved ship maneuverability, etc.

In this case, ballast tanks are filled with ballast water during the ballasting operation at a harbor and is transported to another harbor where the ballast water is discharged by deballasting operation. In this way, the discharge of marine organism and pathogen contained in the ballast water carried from distant location may be dangerous to both people and animal in the new harbor as well as harmful to a new environment.

When the marine life of an invasive species is introduced into a new ecosystem, it may cause a devastating effect to natural flora and fauna which may not have a natural defense system against new species. In addition, harmful bacterial pathogen, such as cholera, may exist in the original harbor. Such a pathogen may be proliferated in a ballast tank over time, so that disease may occur in an area where the pathogen spreads.

In order to prevent such disasters, IMO (International Maritime Organization) has adopted the International Convention for the Control and Management of Ship's Ballast Water in 2004. Recently, the United States of America, where 65 percent of the world's ships call at a port, required the ballast water treatment regulation, showing the movement of the country's marine environment protection.

In order to eliminate the risk caused by this marine organism and pathogen, the ballast water treatment unit may be installed among the ways of the electrolysis, the ultraviolet sterilization, or the sterilizing treatment of ballast water by injecting the chemical compounds into the ballast tank.

The ballast water treatment unit using the electrolysis or the ultraviolet sterilization (UV) is generally installed at the outflow side of ballast pump, but when the submergible ballast pump is adopted, the ballast water treatment unit including electrical equipment is subject to some constraints on submerged condition of ballast tank.

Accordingly, when a submergible ballast pump is applied, the ballast water treatment unit should be installed on the deck, connecting the ballast water treatment unit and the ballast tank with pipes.

However, when the ballast water treatment unit is installed on the deck, it should be installed in the explosion proof space, involving excessive installation costs for the explosion proof space.

In addition, the explosion proof space installed on the deck is located at the upper side of the ballast tank installed with ballast pump located in the center of the ship. Accordingly, since the distance from a deck house where supervisor mainly works reaches 100 meters for small boats, and for large vessels, reaches 200 meters, it has many difficulties in management and emergency steps. And, because the explosion proof space is exposed to the outside, it is vulnerable for waves at the time of stormy weather, low temperature, and high humidity, etc.

In addition, when the ballast water treatment unit is installed on the deck, a Fire & General Service Pump in the engine room, not the submergible ballast pump, is used for seawater stored in APT (Aft Peak Tank). Therefore, it involves excessive additional costs for installation of another ballast water treatment unit. The document EP 2703359 relates to an apparatus for treating ballast water using an electrolysis method for preventing explosion of a ship.

### SUMMARY OF THE INVENTION

Accordingly, the present invention is conceived to solve the foregoing problems, and an aspect of the present invention provides to the ballast water treatment system to ensure that there is no need to install additional explosion proof space by installing the ballast water treatment unit in the engine room especially for the tanker ship.

In accordance with an embodiment of the present invention, the ballast water treatment system includes: a ballast water treatment unit which is installed in the engine room; the first ballast pump to transfer ballast water to the ballast water treatment unit; a ballast tank connected to the ballast water treatment unit through a main pipe, where ballast water is transferred and stored through the main pipe; the second ballast pump submerged in the ballast water of the ballast tank; a branch pipe branched from the main pipe and transferring some of ballast water treated in the ballast water treatment unit to APT.

The main pipe may be connected to the ballast tank through the deck from the ballast water treatment unit.

Further, the main pipe may be installed with check valves for preventing back flow of treated water in one side of the pipe passing through the deck.

On the other hand, in the outflow side of the check valves, isolation valve may be installed.

In accordance with an embodiment of the present invention, the ballast water treatment system may be installed for a tanker ship.

In addition, the ballast tank may be installed under the cargo containment for loading the cargo.

On the other hand, in accordance with an embodiment of the present invention, in the ballast water treatment unit, the first ballast pump may be operated during ballasting of transferring ballast water to the ballast tank, wherein the second ballast pump may be operated during deballasting of discharging ballast water from the ballast tank to the sea.

In accordance of the present invention, for a tanker ship installed with the ballast water treatment unit in the engine room, there is an effect that may reduce the installation costs for the explosion proof space structure due to the unnecessity of the separate explosion proof space.

In addition, it is possible to supply treated water to the ballast tank and APT simultaneously, by one or two ballast pumps installed in the engine room, so that the cost of facilities can be reduced.

### BRIEF EXPLANATION OF THE DRAWINGS

Fig.1 is a block diagram of the ballast water treatment system according to an embodiment of the present invention; and
Fig.2 is a block diagram of a flow of the ballast water during ballasting in the ballast water treatment system according to an embodiment of the present invention; and
Fig.3 is a block diagram of a flow of the ballast water during deballasting in the ballast water treatment system according to an embodiment of the present invention; and
Fig.4 is a block diagram of a flow of the ballast water during stripping in the ballast water treatment system according to an embodiment of the present invention.

### DETAILED DESCRIPTION OF THE EMBODIMENTS

In the following, desirable exemplary embodiments of the present invention are described with reference to the accompanying drawings in detail. Firstly, in the case of marking the reference numbers to components of each drawing, the same reference numbers are used throughout the drawings to refer to the same or like parts. Detailed descriptions of well-known functions and structures incorporated herein may be omitted to avoid obscuring the subject matter of the present invention. In the following, with reference to accompanying drawings, desirable exemplary embodiments of the present invention will be described in detail, but the technical idea of the present invention may be not limited to the embodiments set forth herein, it can be modified and embodied in various ways by a person having knowledge of the normal in the art.

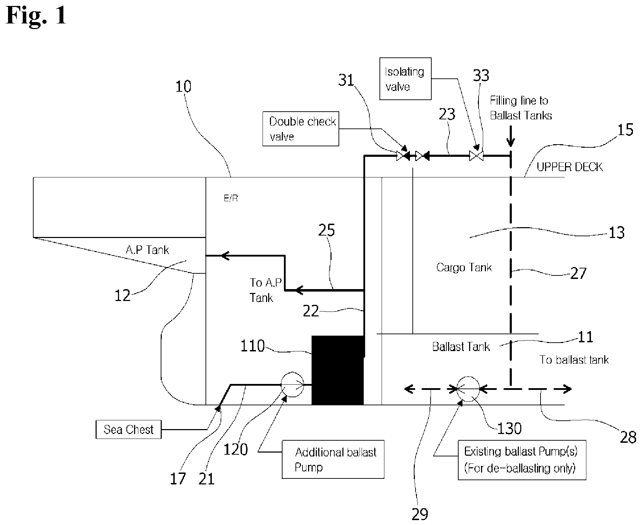

Fig.1 is a block diagram of the ballast water treatment system according to an embodiment of the present invention.

As shown in Fig.1, the ballast water treatment system according an embodiment of the present invention may include the ballast water treatment unit (110) installed in the engine room (10), the first ballast pump (120) for transferring ballast water to the ballast water treatment unit (110), and the ballast tank (11) and APT (Aft Peak Tank, 12) which are connected to the ballast water treatment unit (110).

The ballast water treatment unit (110) may include a unit for generating an oxidizing agent by electrolysis. The ballast water treatment unit (110) of the present invention is not limited to the embodiments set forth herein, and it may be embodied in several different ways to generate oxidizing agent. For example, it may be embodied in a unit using direct injection of an oxidant.

The first ballast pump (120) introduces the sea water used for the ballast water from Sea Chest (17) through an inflow pipe (21) and transfers it to the ballast water treatment unit (110).

In addition, the treated water containing an oxidizing agent from the ballast water treatment unit (110) is transported respectively to APT (12) and the ballast tank (11) by the first ballast pump (120) via pipes.

In other words, with the ballast water treatment unit (110) connected to the ballast tank (11), a vertical main pipe (22), a horizontal pipe (23), and a vertical supply pipe (27), the treated water can be transported sequentially via these pipes.

In addition, the ballast water treatment unit (110) may transfer the treated water by being connected to APT (12) via the branch pipe (25) branched from the vertical main pipe (22).

The horizontal pipe (23) is positioned on the upper side of the cargo tank (13), being connected to the upper side of the vertical main pipe (22) and extended horizontally on the deck (10).

A check valve (31) is installed in the horizontal pipe (23) in order to prevent the treated water from flowing back into the safety zone from the danger zone. In other words, in order to install the ballast water treatment unit (110) in the engine room (10), in accordance with IACS (International Association of Classification Societies)'s regulations, the direction of moving the untreated water from the safe zone of engine room (10) after being treated to the dangerous zone of the ballast tank (11) can be allowed. On the contrary, the direction of moving the treated water from the dangerous zone of the ballast tank (11) to the safe zone of engine room (10) is not allowed.

In this case, two check valves (31) may be installed together to strengthen safety.

In addition, at the horizontal pipe (23), an isolating valve (33) may be installed in the outflow side, or the rear side of the check valve (31). Using this valve, by blocking the pipe in an emergency, enables to comprise more secure system.

The rear end of the horizontal pipe (23) is bent downward and it is connected to the vertical supply pipe (27).

The vertical supply pipe (27), piercing and extending through a side area of the ballast tank (11), is connected to the lower ballast tank (11).

In this case, the ballast tank (11) is installed at the lower part of the cargo tank (13).

At the end of the vertical supply pipe (27), a connection pipe (28) can be installed to connect with other ballast tanks (not shown), so that the system including multiple ballast tanks can be comprised.

In this case, the second ballast pump (130) is installed in a submerged state in the ballast tank (11).

The second ballast pump (130) discharges ballast water in the ballast tank (11) to the outside of the ship via an outflow pipe (29) during deballasting.

In this way, the ballast water treatment system according to an embodiment of the present invention, in order to install the ballast water treatment unit (110) in the engine room (E/R), as shown in Fig. 1, including the submergible second ballast pump (130), together with the additionally installed first ballast pump (120), is configured to transport the water treated by the ballast water treatment unit (110) to the ballast tank (11), after piercing the deck via the pipe.

The ballast water treatment system according to an embodiment of the present invention may be applied to not a Dry Cargo such as Bulk Carrier and Container but a ship installed with submersible ballast pump such as MR Tanker, for installing the ballast water treatment unit (110) in the engine room (10).

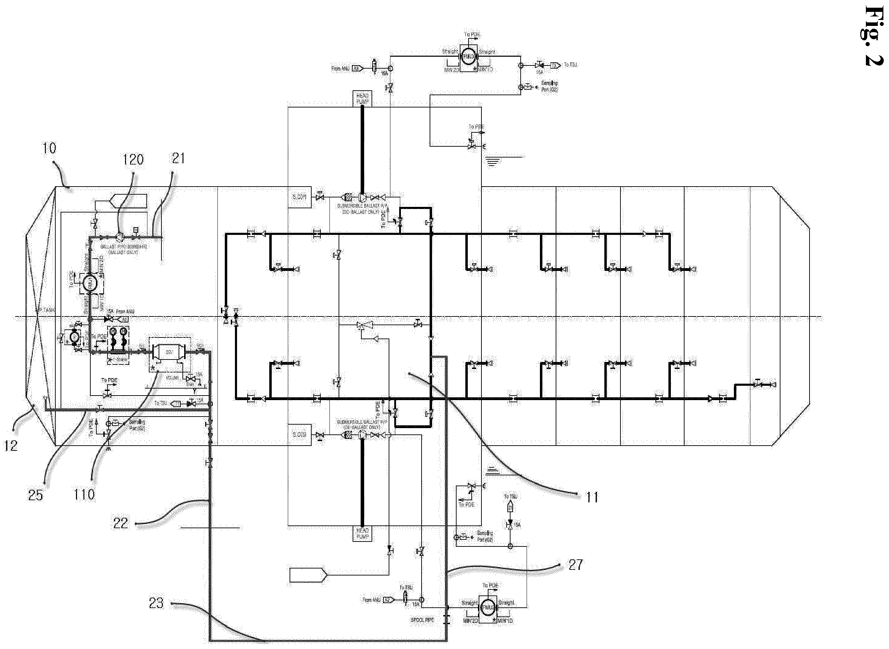

Fig.2 is a block diagram showing a flow of ballast water during ballasting in the ballast water treatment system according to an embodiment of the present invention.

As shown in Fig.2, the sea water used for ballast water is transported to the ballast water treatment unit (110) via the inflow pipe (21) by the first ballast pump (120) installed in the engine room (10).

The treated water discharged from the ballast water treatment unit (110) is transported to the ballast tank (11) via the vertical main pipe (22), the horizontal pipe (23), and the vertical supply pipe (27) in a state of being sterilized.

In addition, some of the treated water discharged from the ballast water treatment unit (110) is transferred to APT (12) via the branch pipe (25) branched from the vertical main pipe (22).

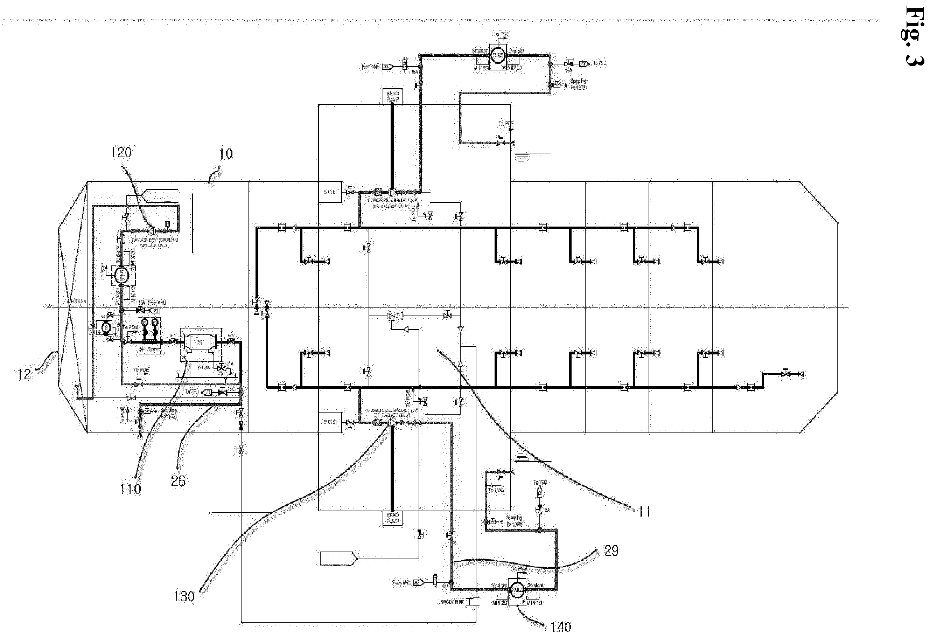

Fig.3 is a block diagram showing a flow of ballast water during deballasting in the ballast water treatment system according to an embodiment of the present invention.

As shown in Fig.3, during the deballasting of discharging the ballast water which have passed through the ballast water treatment unit (110) and stored in the ballast tank (11), the ballast water is discharged to the outside of the ship via the submergible second ballast pump (130) and the outflow pipe (29).

In this case, a flow meter (140) may be installed in the outflow pipe (29) for monitoring the flow rate during discharging. In addition, the discharging line for the neutralizing agent supplying device (not shown) is connected to the outflow pipe (29) in order to neutralize the ballast water discharged via the outflow pipe (29).

On the other hand, the ballast water stored in APT (12) is discharged to the outside of the ship via the outflow pipe (26) by the operation of the first ballast pump (120).

In this case, the outflow pipe (26) may be configured as a separate pipe, and besides, it may be configured to share some part of the inflow pipe (21).

Also, in addition to the first ballast pump (120), the Fire & General Service Pump (not shown) installed in the engine room (10) may be used for discharging the ballast water.

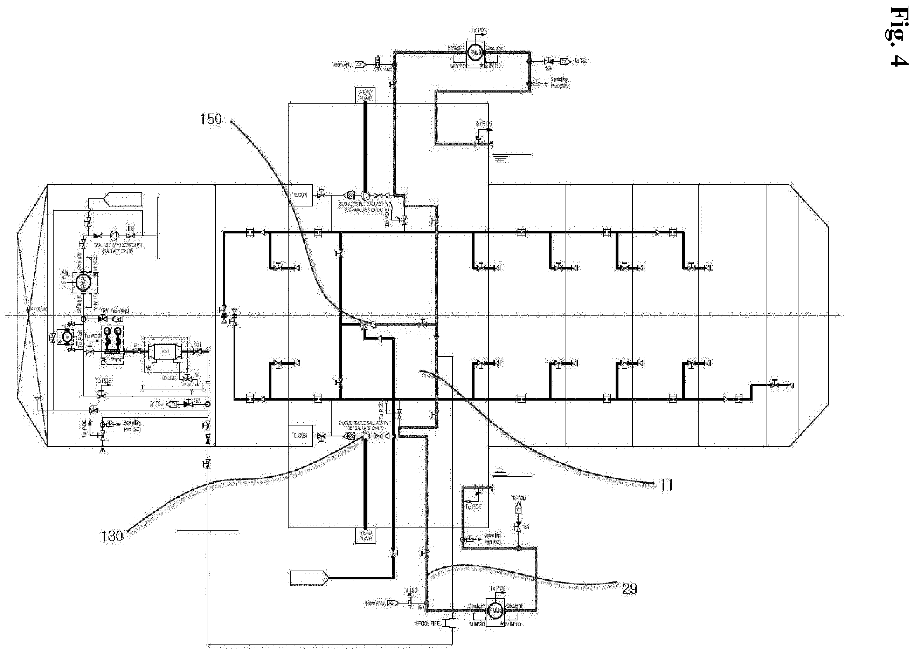

Fig.4 is a block diagram of a flow of the ballast water during stripping in the ballast water treatment system according to an embodiment of the present invention.

As shown in Fig.4, during stripping of discharging a little of ballast water in the ballast tank (11) which is difficult to discharge with the submergible second ballast pump (130), ballast water is discharged to the outside of the ship via the stripping eductor (150) and the outflow pipe (29).

In addition, in order to neutralize ballast water discharged to the outside of the ship, in the same way of deballasting shown in Fig. 3, the discharging line of the neutralizing agent supplying device(not shown) is connected to the outflow pipe (29).

As mentioned above, the ballast water treatment system according to an embodiment of the present invention, not installed with the ballast water treatment unit (110) on the deck of the ship, but installed in a safe zone of the engine room (10) in the tanker ship equipped with the first ballast pump (120) in the engine room (10), has no need to install a separate explosion proof space.

In addition, with one first ballast pump (120) installed in the engine room (10), the treated water can be supplied to the ballast tank (11) and the APT (12) simultaneously, accordingly, it is possible to reduce the cost for facilities and installation due to unnecessity of installation for the additional facilities.

### [Description of symbols]

10: Engine room
11: Ballast tank
12: APT (Aft Peak Tank)
13: Cargo tank
31: Check valve
110: Ballast water treatment unit
120: The first ballast pump
130: The second ballast pump
140: Flow meter
150: Stripping eductor

## Claims

1. A ballast water treatment system with a ballast water treatment unit in the engine room of a ship having a submergible pump comprising:
the ballast water treatment unit which is installed in the engine room;
a first ballast pump to transfer ballast water to the ballast water treatment unit, wherein the first ballast pump is installed in the engine room;
a ballast tank connected to the ballast treatment unit through a main pipe, where ballast water is transferred through the main pipe;
a submergible ballast pump submerged in the ballast water of the ballast tank;
and
the main pipe, connected to the ballast tank through the deck of the ship from the ballast water treatment unit, installed with at least two check valves in one side of the pipe passing through the deck, wherein an isolating valve is installed in the outflow side of the check valve.

2. A ballast water treatment system with a ballast water treatment unit in the engine room of a ship having a submergible pump according to claim 1, wherein the ship is a tanker ship.

3. A ballast water treatment system with a ballast water treatment unit in the engine room of a ship having a submergible pump according to claim 1, wherein the ballast tank is installed under the cargo containment for loading the cargo.

4. A ballast water treatment system with a ballast water treatment unit in the engine room of a ship having a submergible pump according to claim 1, wherein the first ballast pump is operated during ballasting of transferring ballast water to the ballast tank.

5. A ballast water treatment system with a ballast water treatment unit in the engine room of a ship having a submergible pump according to claim 1, wherein the submergible ballast pump is operated during deballasting of discharging ballast water from the ballast tank to the sea.

## Patentansprüche

1. Ballastwasserbehandlungssystem mit einer Ballastwasserbehandlungseinheit im Maschinenraum eines Schiffes mit einer Tauchpumpe, umfassend:
die Ballastwasserbehandlungseinheit, die im Maschinenraum installiert ist; eine erste Ballastpumpe zum Übertragen von Ballastwasser zu der
Ballastwasserbehandlungseinheit,
wobei die erste Ballastpumpe im Maschinenraum installiert ist;
einen Ballasttank, der mit der Ballastwasserbehandlungseinheit über eine
Hauptleitung verbunden ist,
wobei Ballastwasser durch die Hauptleitung übertragen wird;
eine Tauchballastpumpe, die in das Ballastwasser des Ballasttanks eingetaucht ist;
und
die Hauptleitung, die mit dem Ballasttank durch das Deck des Schiffes von der Ballastwasseraufbereitungseinheit aus verbunden ist, mit mindestens zwei Rückschlagventilen in einer Seite des durch das Deck führenden Rohres installiert ist, wobei ein Absperrventil in der Ausströmseite des Rückschlagventils installiert ist.

2. Ballastwasserbehandlungssystem mit einer Ballastwasserbehandlungseinheit im Maschinenraum eines Schiffes mit einer Tauchpumpe nach Anspruch 1, wobei das Schiff ein Tanker ist.

3. Ballastwasserbehandlungssystem mit einer Ballastwasserbehandlungseinheit im Maschinenraum eines Schiffes mit einer Tauchpumpe nach Anspruch 1, wobei der Ballasttank unter dem Laderaum zum Laden von Ladung installiert ist.

4. Ballastwasserbehandlungssystem mit einer Ballastwasserbehandlungseinheit im Maschinenraum eines Schiffes mit einer Tauchpumpe nach Anspruch 1, wobei die erste Ballastpumpe während des Ballastierens von Übertragen Ballastwassers in den Ballasttank betrieben wird.

5. Ballastwasserbehandlungssystem mit einer Ballastwasserbehandlungseinheit im Maschinenraum eines Schiffes mit einer Tauchpumpe nach Anspruch 1, wobei die Tauchballastpumpe beim Entballasten von Entladen Ballastwassers aus dem Ballasttank ins Meer betrieben wird.

## Revendications

1. Système de traitement d'eau de ballast doté d'une unité de traitement d'eau de ballast dans la salle machine d'un navire ayant une pompe submersible comprenant :
l'unité de traitement d'eaux de ballast installée dans la salle machine ;
une première pompe de ballast pour transférer de l'eau de ballast vers l'unité de traitement d'eau de ballast, la première pompe de ballast étant installée dans la salle machine ;
un réservoir de ballast relié à l'unité de traitement d'eau de ballast via une conduite principale, de l'eau de ballast étant transférée via la conduite principale ;
une pompe de ballast submersible immergée dans l'eau de ballast du réservoir de ballast ; et
la conduite principale, reliée au réservoir de ballast par l'intermédiaire du pont du navire depuis l'unité de traitement d'eau de ballast, installée avec au moins deux clapets antiretour sur un côté de la conduite traversant le pont, un robinet d'arrêt étant installé sur le côté aval du clapet antiretour.

2. Système de traitement d'eau de ballast doté d'une unité de traitement d'eau de ballast dans la salle machine d'un navire ayant une pompe submersible selon la revendication 1, le navire étant un tanker.

3. Système de traitement d'eau de ballast doté d'une unité de traitement d'eau de ballast dans la salle machine d'un navire ayant une pompe submersible selon la revendication 1, le réservoir de ballast étant installé sous la zone cargo pour le chargement de la cargaison.

4. Système de traitement d'eau de ballast doté d'une unité de traitement d'eau de ballast dans la salle machine d'un navire ayant une pompe submersible selon la revendication 1, la première pompe de ballast fonctionnant lors du ballastage d'eau de ballast transférée vers le réservoir de ballast.

5. Système de traitement d'eau de ballast doté d'une unité de traitement d'eau de ballast dans la salle machine d'un navire ayant une pompe submersible selon la revendication 1, la pompe de ballast submersible fonctionnant lors du déballastage d'eau de ballast évacuées du réservoir de ballast vers la mer.
